# EUROPEAN PATENT APPLICATION

(11) **EP 2 199 917 A1**
(43) Date of publication of application: **23.06.2010**
(21) Application number: 09171012.9
(22) Date of filing: 22.09.2009
(51) Int. Cl.: G06F 12/08

(54) **Cache control apparatus and method**

(30) Priority: 16.12.2008 KR 20080127878
(71) Applicant: Samsung Electronics Co., Ltd., Suwon-si, Gyeonggi-do 442-742 (KR)
(72) Inventor: Kim, Doo-Hyun, Seoul 140-030 (KR); Song, Joon-Ho, Gyeonggi-do 445-734 (KR)
(74) Representative: D'Halleweyn, Nele Veerle Trees Gertrudis

(57) **Abstract**

A cache control apparatus and method are provided. The cache control apparatus may include a parameter input unit to receive a first parameter corresponding to a block-level cache in a main memory, a cache index extraction unit to extract a cache index from the first parameter, a cache tag extraction unit to extract a cache tag from the first parameter, and a comparison unit to determine whether a cache hit occurs using the cache index and the cache tag.

## Description

### BACKGROUND

### 1. Field

One or more example embodiments relate to a cache control apparatus and method, and more particularly, to a cache control apparatus and method for memory data access in an arbitrarily-shaped block.

### 2. Description of the Related Art

Currently, a huge amount of content may be provided to users in various ways due to the development of multimedia technologies.

Much research has been conducted on a variety of video processing technologies to control excessive memory access due to a huge amount of video data in association with a video data codec of contents providing services. When the amount of video is not substantial, a real-time processing may be performed. However, since a demand for high-resolution video increases, the amount of video may increase. Accordingly, memory access for video processing is the focus of attention.

In particular, a certain amount of latency may occur in reading and writing data in a Dynamic random access memory (DRAM), which may store mass video data, due to physical characteristics of the DRAM. Although a latency period may vary depending on a type of DRAM, a manufacturer, an input frequency, and the like, it may be greater than a few cycles.

Latency may act as significant load when accessing mass data. In general, a burst access may be used, which may simultaneously access all the adjacent data, and thereby initial latency may be reduced.

However, even though a burst access is applied, initial latency may occur when a row to access changes, or when accessing new data, for example, when a single burst operation is completed.

That is, in block-level access of a video codec, latency may occur every time a row changes, since an amount of adjacent data is limited.

### SUMMARY

Example embodiments may provide a cache control apparatus and a method which improve an efficiency of block-level access of image data using a block-level cache, and thereby may improve a cache hit probability.

Example embodiments may also provide a cache control apparatus and method which may improve an efficiency of block-level access of image data including a plurality of frames.

According to example embodiments, a cache control apparatus may be provided. The cache control apparatus may include a parameter input unit to receive a first parameter corresponding to a block-level cache in a main memory, a cache index extraction unit to extract a cache index from the first parameter, a cache tag extraction unit to extract a cache tag from the first parameter, and a comparison unit to determine whether a cache hit occurs using the cache index and the cache tag.

The first parameter may include a row information area and a column information area for the block-level cache in the main memory.

The row information area may include a row cache tag, a row cache index, and a row Byte offset, and the column information area may include a column cache tag, a column cache index, and a column Byte offset.

The row cache tag and the column cache tag may include information identifying a first block from among a plurality of blocks in the main memory. The plurality of blocks may correspond to a same cache line in a cache memory. Also, the row cache index and the column cache index may include information identifying a first cache line from among a plurality of cache lines in a cache memory. The first cache line may store a first block.

The row Byte offset and the column Byte offset may include information identifying first data from among pieces of data which are simultaneously stored in a same cache line in a cache memory.

According to other example embodiments, the first parameter may further include a frame information area for a frame-level cache in the main memory. In this instance, the row information area may include a row cache tag, a row cache index, and a row Byte offset, the column information area may include a column cache tag, a column cache index, and a column Byte offset, and the frame information area may include a frame cache tag, a frame cache index, and a frame Byte offset.

In this instance, the frame cache tag, the row cache tag, and the column cache tag may include information identifying a first block from among a plurality of blocks in the main memory. The plurality of blocks may correspond to a same cache line in a cache memory.

The frame cache index, the row cache index, and the column cache index may include information identifying a first cache line from among a plurality of cache lines in a cache memory, the first cache line storing a first block.

According to still other example embodiments, the cache control apparatus may further include a processing unit to extract and provide cache data corresponding to the first parameter when the comparison unit determines that the cache hit occurs.

According to yet other example embodiments, a cache control method may be provided. The cache control method includes receiving a first parameter corresponding to a block-level cache in a main memory, extracting a cache index and a cache tag from the first parameter, and determining whether a cache hit occurs using the cache index and the cache tag.

Additional aspects, and/or advantages will be set forth in part in the description which follows and, in part, will be apparent from the description, or may be learned by practice of the embodiments.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 illustrates a configuration of a cache control apparatus according to example embodiments;
FIG. 2 conceptually illustrates a block-level cache according to example embodiments;
FIG. 3 illustrates a two-dimensional (2D) cache parameter according to example embodiments;
FIG. 4 illustrates a cache index extracted from a cache parameter according to example embodiments;
FIG. 5 illustrates a cache tag extracted from a cache parameter according to example embodiments;
FIG. 6 conceptually illustrates a block-level cache according to example embodiments;
FIG. 7 illustrates a cache parameter of the block-level cache of FIG. 6;
FIG. 8 conceptually illustrates a block-level cache according to other example embodiments;
FIG. 9 illustrates a cache parameter of the block-level cache of FIG. 8;
FIG. 10 illustrates a cache parameter according to still other example embodiments;
FIG. 11 conceptually illustrates a block-level cache and a frame-level cache according to example embodiments;
FIG. 12 illustrates a cache parameter of the block-level cache and the frame-level cache of FIG. 11; and
FIG. 13 illustrates a flowchart of a cache control method according to example embodiments.

### DETAILED DESCRIPTION

Reference will now be made in detail to example embodiments, examples of which are illustrated in the accompanying drawings, wherein like reference numerals refer to the like elements throughout. Example embodiments are described below to explain the present disclosure by referring to the figures.

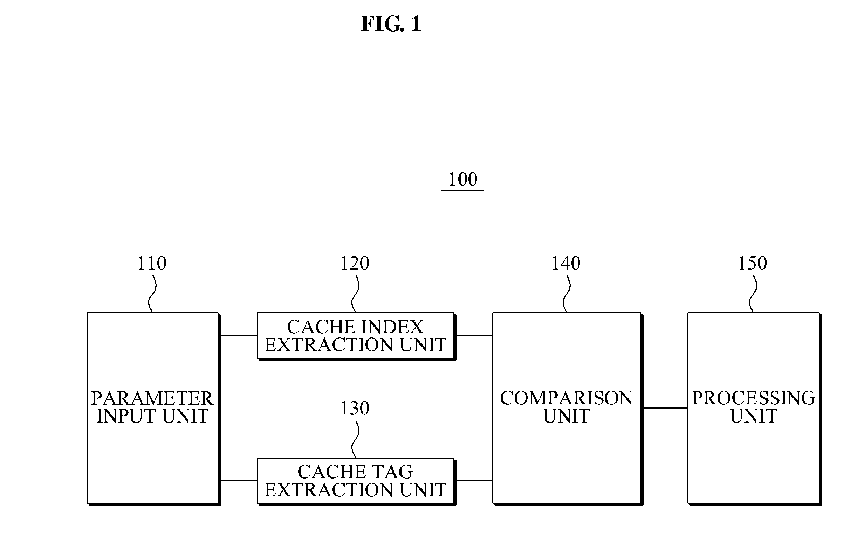

FIG. 1 illustrates a configuration of a cache control apparatus 100 according to example embodiments.

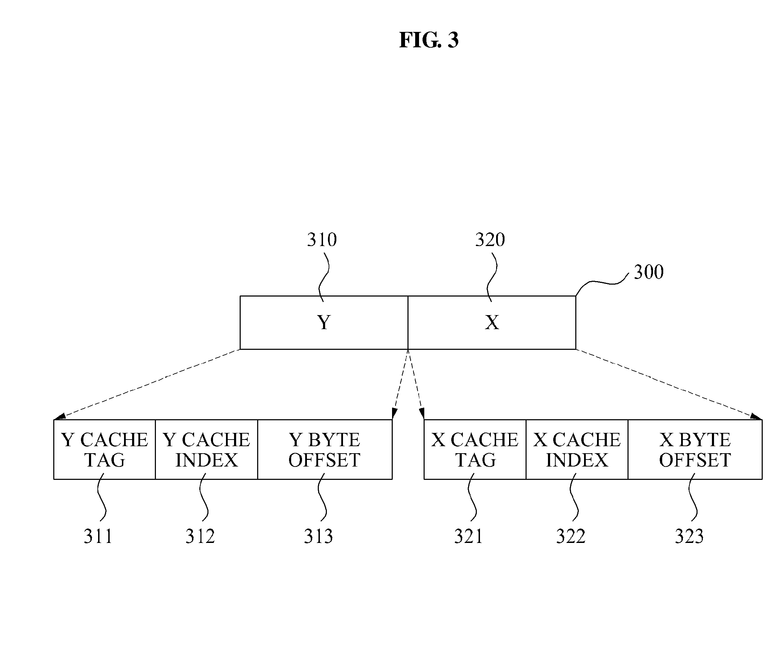

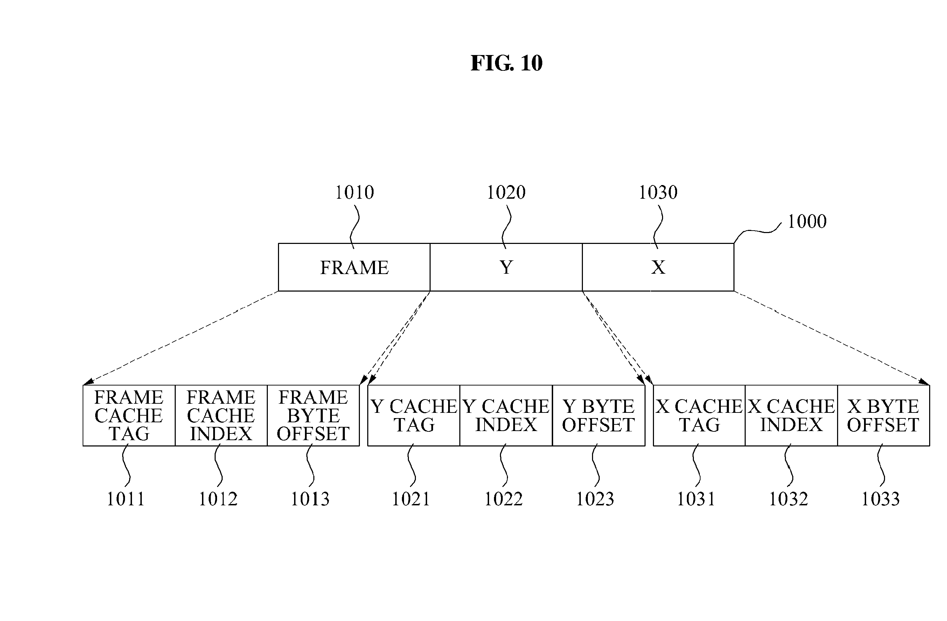

A parameter input unit 110 may receive a first parameter from a Central Processing Unit (CPU). The first parameter may include information about data to be accessed by the CPU. According to example embodiments, the first parameter may correspond to a two-dimensional (2D) block cache or a three-dimensional (3D) block cache including a frame, which is described in detail below with reference to FIGS. 3 and 10.

A cache index extraction unit 120 may extract a Y cache index and an X cache index from the first parameter. Also, when the first parameter corresponds to the 3D block cache, the cache index extraction unit 120 may extract a frame cache index. In this instance, a predetermined portion of the first parameter may be extracted as the Y cache index or X cache index.

A cache tag extraction unit 130 may extract a Y cache tag and an X cache tag from the first parameter. Also, when the first parameter corresponds to the 3D block cache, the cache tag extraction unit 130 may extract a frame cache tag.

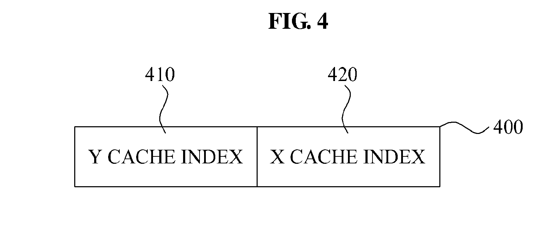

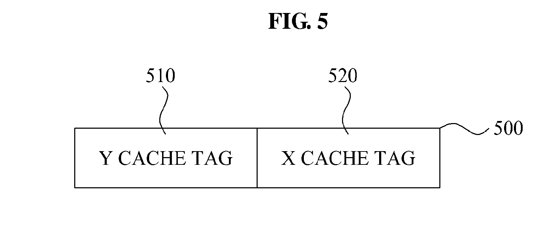

An operation of the cache index extraction unit 120 and the cache tag extraction unit 130 is described in detail below with reference to FIGS. 4 and 5.

A comparison unit 140 may compare the extracted cache tag of the first parameter with cache tag information stored in a cache line, corresponding to the cache index extracted from the first parameter, from among a plurality of cache lines of a cache memory. The comparison unit 140 may determine a cache hit occurs when all the cache tag information is identical, and determine a cache miss occurs when the cache tag information is different.

When the cache hit occurs, a processing unit 150 may extract data corresponding to the first parameter by referring to Byte offset information from among data stored in the cache line. When the cache miss occurs, the processing unit 150 may report the cache miss to the CPU.

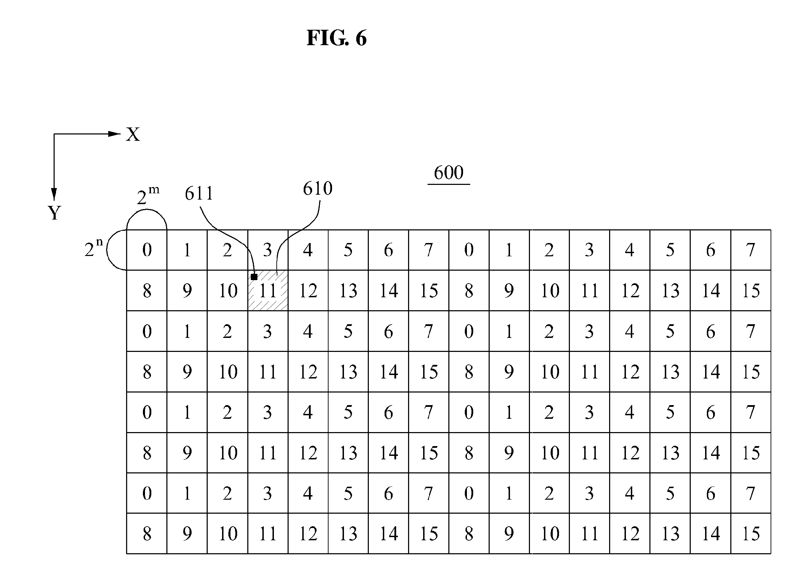

An operation of the comparison unit 140 and the processing unit 150 is described in detail below with reference to FIGS. 6 through 10.

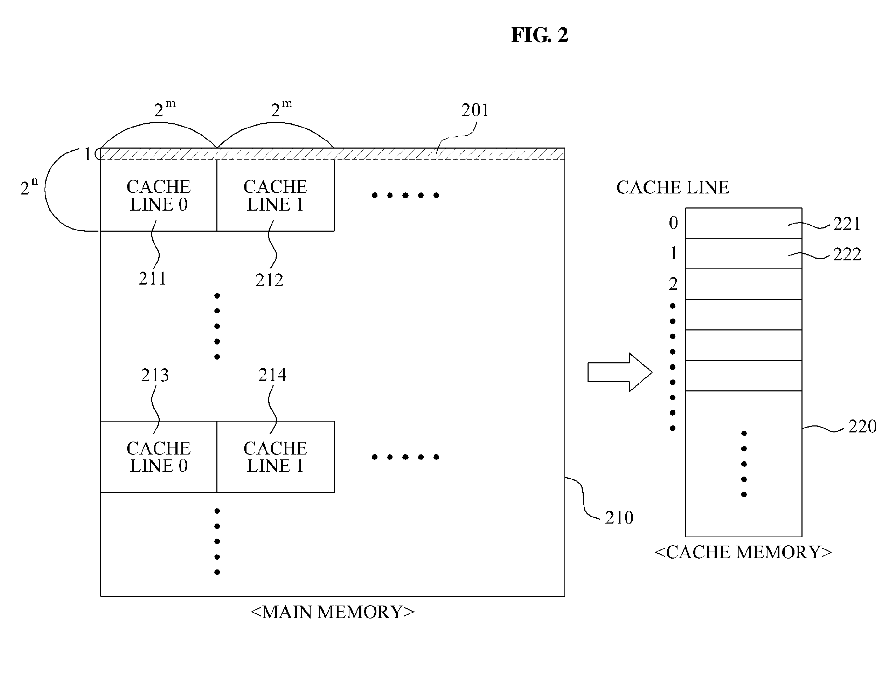

FIG. 2 conceptually illustrates a block-level cache according to example embodiments.

A cache memory 220 may temporarily store a portion of data stored in a main memory 210. The cache memory 220 may surpass the main memory 210 in terms of data extraction and transmission speed. Accordingly, a relatively low extraction and transmission speed of the main memory 210 may be compensated for, and thus a command processing speed may be improved.

In general, however, a cost per capacity of the cache memory 220 may be higher than a cost per capacity of the main memory 210. Accordingly, an efficiency of command processing may be affected by a method of storing data of the main memory 210 in the cache memory 220.

That is, as a probability of a "cache hit", that is, a state where data to be accessed is stored in the cache memory 220, increases, the efficiency of the processing may increase. Accordingly, much research on cache control may focus on increasing a cache hit, that is, a probability that the data to be accessed by the cache system is stored in the cache memory 220, and decreasing a probability that the data to be accessed by the cache system is not stored in the cache memory 220 (hereinafter, referred to as "cache miss").

A size of the main memory 210 is relatively large, whereas a size of the cache memory 220 is relatively small. Accordingly, the main memory 210 may be generally divided into a plurality of portions and some portions may be stored in the cache memory 220.

According to a line cache scheme, the cache memory 220 may be divided into a plurality of cache lines 221, 222, and the like, and a portion of data of the main memory 210 may be stored in the plurality of cache lines 221, 222, and the like. In this instance, data that may be stored in a single cache line of the cache memory 220 may be data of one or more row lines of the main memory 210.

For example, data stored in the main memory 210 may be divided by line, and data stored in an area 201 may be stored in any one of the cache lines 221, 222, and the like of the cache memory 220.

However, although the line cache scheme may be applied to an application where data that may be simultaneously accessed exists in a same line, the line cache scheme may not be appropriate for an application where data that may be simultaneously accessed is stored in a predetermined block, such as a spatially adjacent block in the main memory 210.

According to example embodiments, data, which is set corresponding to a same cache line of the cache memory 220, in the main memory 210 may have an arbitrary unit of a block as opposed to a row line.

Specifically, in the line cache scheme, data stored in a single cache line of the cache memory 220 is data of one or more lines of the main memory 210, for example, data of the area 201. According to example embodiments, however, a unit of data to be stored in a single cache line may be determined as a 2D block such as a first block 211. Each 2D block may have a column of 2^{m} bits (or bytes) and a row of 2ⁿ bits (or bytes) in size. Here, m and n may be a natural number.

Also, since the size of the main memory 210 is greater than the size of the cache memory 220 as described above, a portion of the plurality of blocks of the main memory 210 may be controlled to correspond to the same cache line of the cache memory 220.

According to example embodiments, the first block 211 of the 2D blocks and a second block 212 may correspond to a cache line (0) 221 and a cache line (1) 222, respectively.

Also, the first block 211 and a block 213 may correspond to the cache line (0) 221. In this instance, when data stored in the first block 211 is stored in the cache line (0) 221, data stored in the block 213 may not be stored in the cache line (0) 221.

Similarly, the second block 212 and a block 214 may correspond to the cache line (1) 222. In this instance, when data stored in the block 212 is stored in the cache line (1) 222, data stored in the block 214 may not be stored in the cache line (1) 222.

FIG. 3 illustrates a 2D cache parameter according to example embodiments.

According to example embodiments, a first parameter 300, received by a parameter input unit 110 of FIG. 1 from a system, may include a row information area 310 and a column information area 320. Hereinafter, 'Y' may indicate a row and 'X' may indicate a column.

The Y information area 310 may include a Y cache tag 311, a Y cache index 312, and a Y Byte offset 313. The X information area 320 may include an X cache tag 321, an X cache index 322, and an X Byte offset 323.

According to example embodiments, the Y cache tag 311 and the X cache tag 321 may be extracted by a cache tag extraction unit 130 of FIG. 1 from a first parameter 300. Also, the Y cache index 312 and the X cache index 322 may be extracted by a cache index extraction unit 120 of FIG. 1 from the first parameter 300.

The Y cache tag 311 and the X cache tag 321 may include information identifying a first block from among a plurality of blocks in a main memory, where the first block corresponds to a cache line in a cache memory. In this instance, the first block may be a block desired to be currently accessed. For example, the Y cache tag 311 and the X cache tag 321 may include information identifying, in the main memory 210, a first block from among the first block 211 and the block 213, corresponding to the cache line (0) 221 in the cache memory 220 of FIG. 2. That is, a Y cache tag and an X cache tag may include information identifying a first block, desired to be accessed, from among a plurality of blocks corresponding to a same cache line in a cache memory. In this instance, the plurality of blocks corresponding to the same cache line may have the same cache index information.

Also, the Y cache index 312 and the X cache index 322 may include information identifying a cache line from among a plurality of cache lines in the cache memory 220. In this instance, the cache line may correspond to a block including data desired to be accessed through the first parameter 300.

Also, the Y Byte offset 313 and the X Byte offset 323 may include information identifying data desired to be accessed through the first parameter 300. According to example embodiments, information about the Y Byte offset 313 and the X Byte offset 323 may not be used to determine a cache hit or a cache miss. In the cache hit, the information about the Y Byte offset 313 and the X Byte offset 323 may be used to identify an exact location where the data desired to be accessed through the first parameter 300 is stored.

FIG. 4 illustrates a cache index 400 extracted from a cache parameter according to example embodiments.

According to example embodiments, a cache index extraction unit 120 may extract a Y cache index 410 and an X cache index 420 from a first parameter.

Referring to FIG. 3, the first parameter 300 may be divided into the Y information area 310 and the X information area 320. Also, the Y cache index 312 and the X cache index 322 may be included in the Y information area 310 and the X information area 320, respectively. In this instance, the cache index extraction unit 120 may extract bits from a predetermined location in the first parameter 300 as a cache index.

Although the Y information area 310 and the X information area 320 are configured as illustrated in FIG. 3, a configuration of the Y information area 310 and the X information area 320, that is, a cache tag, a cache index, and a Byte offset, may vary. For example, the Y cache index may be located adjacent to the X cache index.

FIG. 5 illustrates a cache tag 500 extracted from a cache parameter according to example embodiments.

Referring to FIG. 3, the Y cache tag 311 and the X cache tag 321 may be included in the Y information area 310 and the X information area 320, respectively. In this instance, a cache tag extraction unit 130 may extract bits of a predetermined location in the first parameter 300 as a cache tag.

Also, although the Y information area 310 and the X information area 320 are configured as illustrated in FIG. 3, a configuration of the Y information area 310 and the X information area 320 may vary. As illustrated in FIG. 5, the extracted Y cache tag 510 and the extracted X cache tag 520 may be located adjacent to each other before the extraction.

FIG. 6 conceptually illustrates an example of a block-level cache according to example embodiments.

A main memory 600 may be divided into 128 blocks. Specifically, the main memory 600 may be divided into eight blocks in a vertical direction and 16 blocks in a horizontal direction. A single block may have a size that may be stored in a single cache line of a cache memory (not shown). Also, the cache memory may have 16 cache lines from a cache line 0 to a cache line 15.

A single block may have a size of 2^{m} bits (or bytes) in the horizontal direction and 2ⁿ bits (or bytes) in the vertical direction.

For example, when each of m and n is four, a single block may include unit data of 256 bits (or bytes).

In this instance, since the main memory 600 includes 128 blocks, the main memory 600 may have a size that may store unit data of 32768 bits (or bytes). Also, since the cache memory may store data of 16 blocks, the cache memory may have a size that may store unit data of 4096 bits (bytes).

Although the main memory 600 is configured as illustrated in FIG. 6, the main memory 600 is not limited to the above-described examples.

A number designated in each of the plurality of blocks of the main memory 600 may indicate a cache index that may store each block.

When a first parameter associated with an access command to access data 611 is received from a CPU, a cache control apparatus 100 may determine whether a block 610 is stored in the cache memory, and thereby may determine whether a cache hit occurs or a cache miss occurs.

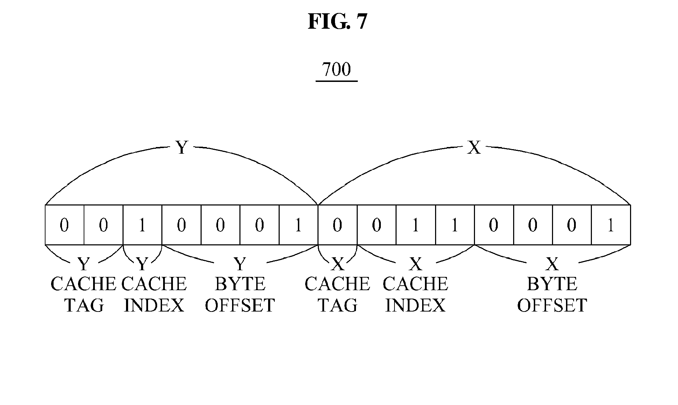

The first parameter associated with the access command to the data 611 is described in detail with reference to FIG. 7.

FIG. 7 illustrates the first parameter of the block-level cache of FIG. 6.

The main memory 600 may include the 128 blocks. The data of 16 blocks of the 128 blocks may be simultaneously stored in the cache memory.

Also, a block having a same cache index may not be simultaneously stored in the cache memory. Accordingly, when data of the block 611 is stored in a cache line 11 of the cache memory, data of the remaining 15 blocks having a cache index of '11' may not be stored in the cache memory.

Hereinafter, it may be assumed that the data 611 is located in a second position in the vertical direction and a second position in the horizontal direction.

According to a conventional line cache scheme, a single cache line may store data of one bit in the vertical direction and 2^{m} * 2ⁿ = 2^{(m+n)} bits (or bytes) in the horizontal direction. In this instance, a cache index included in an address associated with the access command to the data 611 may be '0001', since a remainder obtained by dividing a line number '17' of the data 611 by the number '16' of cache lines of the cache memory may be 1.

Also, a cache tag included in the address may be '001', since the data 611 may be in a second line from among eight lines having the cache index '0001'.

A Byte offset may be '00110001' since the data 611 may be 50^{th} piece of data of 256 pieces of data in a line where the cache index is '0001' and the cache tag is '001'.

Thus, according to the conventional line cache scheme, when a 15-bit address '001000100110001' (based on an order of cache tag - cache index - Byte offset) is received, the cache control apparatus 100 may determine whether line data where the cache index is '0001' and the cache tag is '001' is stored in the cache memory. When the line data is stored in the cache memory, the cache control apparatus 100 may determine that a cache hit occurs, and extract data having the Byte offset of '00110001'.

According to example embodiments, however, since block-level caching may be performed in the cache memory, a cache hit may occur with respect to the data 611, when data of the block 610 is stored in the cache memory.

According to example embodiments, the access command to the data 611 may be received together with a first parameter 700.

Referring to FIG. 6, the cache index may be repeated every two rows in the vertical direction and every eight columns in the horizontal direction. Accordingly, a Y cache index may have one bit and an X cache index may have three bits. The block 610 may correspond to a second block in the vertical direction and a fourth block in the horizontal direction in the above-described pattern, and thus the Y cache index may be '1' and the X cache index may be '011'.

Also, the block 610 may correspond to a first block of the four blocks in the vertical direction and a first block of the two blocks in the horizontal direction, and correspond to the cache line 11. Accordingly, the Y cache tag may be '00' and the X cache tag may be '0'.

Also, since the data 611 may be in a second position in the vertical direction and a second position in the horizontal direction in the block 610, a Y Byte offset may be '0001' and an X Byte offset may also be '0001'.

Accordingly, when the first parameter 700 corresponding to the access command to the data 611 is received by a parameter input unit 110, a cache index extraction unit 120 may extract the Y cache index '1' and the X cache index '011', and a cache tag extraction unit 130 may extract the Y cache tag '00' and the X cache tag '0'.

Also, a comparison unit 140 may read a cache tag of data stored in the cache line 11 corresponding to the block 610 where the extracted Y cache index is '1' and the extracted X cache index is '011'. Also, the comparison unit 140 may determine that a cache hit occurs, when the Y cache tag of the cache line 11 and the Y cache tag '00' of the first parameter 700 are compared and determined to be identical to each other, and when the X cache tag of the cache line 11 and the X cache tag '0' of the first parameter 700 are compared and determined to be identical to each other.

In this instance, a processing unit 150 may extract data where both Y Byte offset and X Byte offset are '0001' as the data 611.

When the Y cache tags or the X cache tags are not identical as a result of the comparing of the cache tags, the comparison unit 140 may determine that a cache miss occurs.

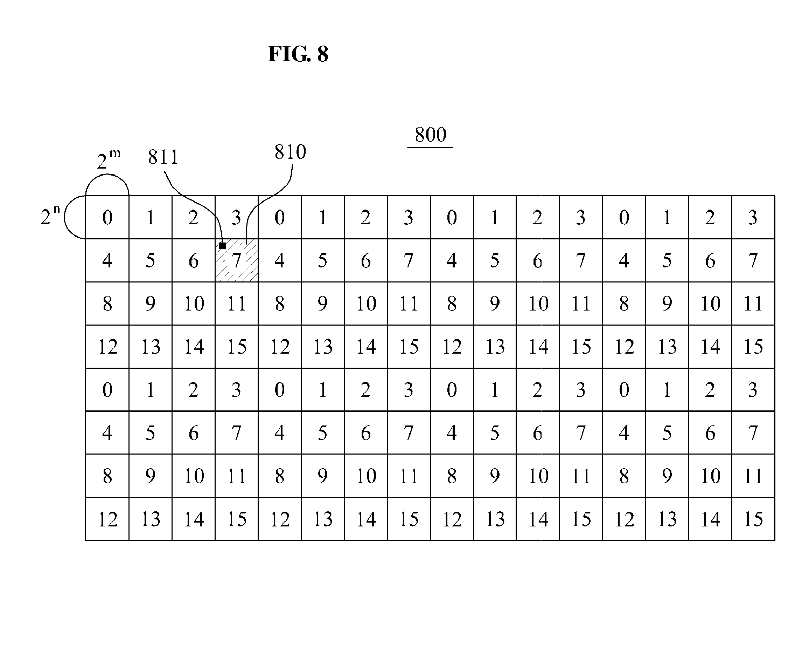

FIG. 8 conceptually illustrates a block-level cache according to other example embodiments.

A main memory 800 may be divided into 128 blocks. Specifically, the main memory 800 may be divided into eight blocks in a vertical direction and 16 blocks in a horizontal direction, which is identical to the example of FIG. 6. A single block of the main memory 800 may have a size of 2^{m} bits (or bytes) in the horizontal direction and 2ⁿ bits (or bytes) in the vertical direction. For example, when each of m and n is four, a single block may include unit data of 256 bits (or bytes).

Although the main memory 800 of FIG. 8 may be configured to be the same as the main memory 600 of FIG. 6, an operation of determining a cache index in a block-level cache may be different from FIG. 6.

According to example embodiments, two blocks and four blocks, having a same cache index, in a vertical direction and a horizontal direction, respectively may exist in the main memory 800. Accordingly, a configuration of a cache tag and a cache index described here may be different from the configuration of the cache tag and the cache index described above with reference to FIG. 6.

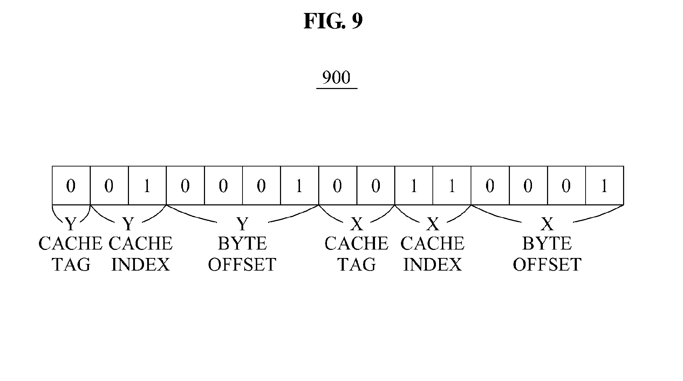

When a first parameter associated with an access command to data 811 is received, an operation of the cache control apparatus 100 is described in detail with reference to FIG. 9.

FIG. 9 illustrates the first parameter of the block-level cache of FIG. 8.

According to example embodiments, it may be assumed that the data 811 is located in a second position in the vertical direction and a second position in the horizontal direction in the block 810.

According to a conventional line cache scheme, a cache index included in an address associated with the access command to the data 811 may be '0001', and a cache tag may be '001', which is similar to the example described with reference to FIG. 7. Also, a Byte offset may be '00110001'.

According to example embodiments, the access command to the data 811 may be received together with a first parameter 900.

Referring to FIG. 8, the cache index may be repeated every four rows in the vertical direction and every four columns in the horizontal direction. Accordingly, a Y cache index may have two bits and an X cache index may also have two bits. The block 810 may correspond to a second block in the vertical direction and a fourth block in the horizontal direction in the above-described pattern, and thus the Y cache index may be '01' and the X cache index may be '11'.

Also, the block 810 may correspond to a first block of the two blocks in the vertical direction and a first block of the four blocks in the horizontal direction, and correspond to the cache line 7. Accordingly, the Y cache tag may be '0' and the X cache tag may be '00'.

Also, since the data 811 may be in the second position in the vertical direction and a second position in the horizontal direction in the block 810, a Y Byte offset may be '0001' and an X Byte offset may be '0001'.

Accordingly, when the first parameter 900 corresponding to the access command to the data 811 is received by a parameter input unit 110, a cache index extraction unit 120 may extract the Y cache index '01' and the X cache index '11', and a cache tag extraction unit 130 may extract the Y cache tag '0' and the X cache tag '00'.

Also, comparison unit 140 may read a cache tag of data stored in the cache line 7 corresponding to the block 810 where the extracted Y cache index is '01' and the extracted X cache index is '11'. Also, the comparison unit 140 may determine that a cache hit occurs, when the Y cache tag of the cache line 7 and the Y cache tag '0' of the first parameter 900 are compared and determined to be identical to each other, and when the X cache tag of the cache line 7 and the X cache tag '00' of the first parameter 900 are compared and determined to be identical to each other.

In this instance, a processing unit 150 may extract data where both Y Byte offset and X Byte offset are '0001' as the data 811.

When the Y cache tags or the X cache tags are not identical as a result of the comparing of the cache tags, the comparison unit 140 may determine that a cache miss occurs.

FIG. 10 illustrates a first parameter according to still other example embodiments.

Image data may include a plurality of frames. Also, data extraction for image data processing may require an access to block data of the plurality of frames.

Accordingly, when data of the plurality of frames is stored in a cache line of a cache memory, in a block form, or as 3D data, a probability of a cache hit may increase. The 3D data may be a set of blocks.

In this instance, the first parameter 1000 may be received together with an access command to access data. The first parameter 1000 may include a frame information area 1010, a Y information area 1020, and an X information area 1030.

The frame information area 1010 may include a frame cache tag 1011, a frame cache index 1012, and a frame Byte offset 1013. The Y information area 1020 may include a Y cache tag 1021, a Y cache index 1022, and a Y Byte offset 1023. The X information area 1030 may include an X cache tag 1031, an X cache index 1032, and an X Byte offset 1033.

A concept of each of the cache tags, cache indexes, and Byte offsets may be understood as a 3D cache parameter extended from the 2D cache parameter described with reference to FIG. 3.

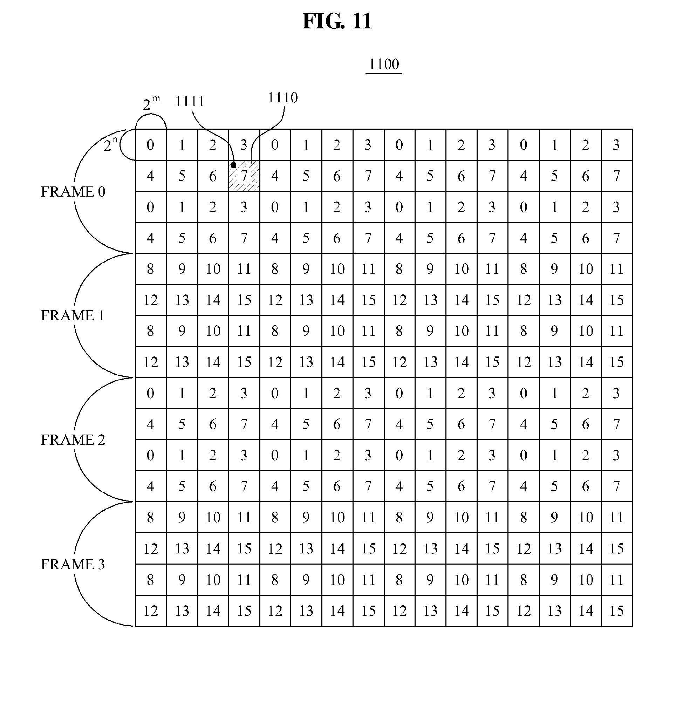

The first parameter 1000 including the frame information area 1010 is described in detail with reference to FIG. 11.

FIG. 11 conceptually illustrates a block-level cache and a frame-level cache according to example embodiments.

A main memory 1100 may be divided into 256 blocks. Specifically, the main memory 1100 may be divided into 16 blocks in a vertical direction and 16 blocks in a horizontal direction. A single block of the main memory 1100 may have a size of 2^{m} bits (or bytes) in the horizontal direction and 2ⁿ bits (or bytes) in the vertical direction. For example, when each of m and n is four, a single block may include unit data of 256 bits (or bytes).

According to example embodiments, data corresponding to a plurality of frames may be stored in a cache memory. For example, a data block corresponding to a frame 0 may be stored in a cache line 0 through a cache line 7 in the cache memory. Also, a data block corresponding to a frame 1, which may be a neighboring frame of the frame 0, may be stored in a cache line 8 through a cache line 15 in the cache memory.

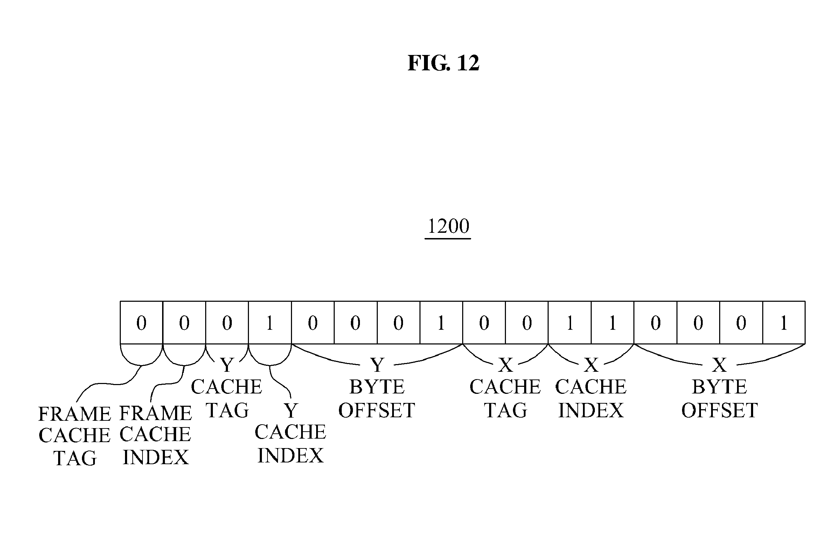

An operation of a cache control apparatus 100, when an extraction command on data 1111 of a block 1110 in the main memory 1100 is received together with a first parameter, is described in detail with reference to FIG. 12.

FIG. 12 illustrates a first parameter of the block-level cache and the frame-level cache of FIG. 11.

According to example embodiments, it may be assumed that the data 1111 is located in a second position in the vertical direction and a second position in the horizontal direction in the block 1110.

According to a conventional line cache scheme, a cache index included in an address may be '0001', since the data 1111 may correspond to a second cache line of 16 cache lines. Also, a cache tag included in the address may be '0001', since the data 1111 may be included in a second data line of 16 data lines having the cache index of '0001' in the main memory 1100. Also, a Byte offset corresponding to the data 1111 may be '00110001'. Accordingly, an address corresponding to an access command to the data 1111 may be 16 bits address of '0001000100110001' which is based on an order of cache tag, cache index, and Byte offset.

According to example embodiments, however, the access command to the data 1111 may be received together with a first parameter 1200.

Referring to FIG. 11, the cache index may be repeated every two rows in the vertical direction and every four columns in the horizontal direction. Also, the cache index may be repeated every two frames. Accordingly, a frame cache index, a Y cache index, and an X cache index may have one bit, one bit, and two bits, respectively. The block 1110 may correspond to a first frame, that is, a frame 0. Also, the block 1110 may correspond to a second block in the vertical direction and a fourth block in the horizontal direction in the above-described pattern. Accordingly, the frame cache index may be '0', the Y cache index may be '1', and the X cache index may be '11'.

Also, the block 1110 may be a first block of the two blocks in the vertical direction and a first block of the four blocks in the horizontal direction in the frame 0, and correspond to the cache line 7. Here, the frame 0 may be a first frame from among the frame 0 and the frame 2 corresponding to a same cache line. Accordingly, the frame cache tag, the Y cache tag, and the X cache tag may be '0', '0', and '00', respectively.

Also, since the data 1111 may be in a second position in the vertical direction and a second position in the horizontal direction in the block 1110, a Y Byte offset may be '0001' and an X Byte offset may also be '0001'.

Accordingly, when the first parameter 1200 corresponding to the access command to access the data 1111 is received by a parameter input unit 110, a cache index extraction unit 120 may extract the frame cache index '0', the Y cache index '1' and the X cache index '11', and a cache tag extraction unit 130 may extract the frame cache tag '0', the Y cache tag '0', and the X cache tag '00'.

Also, a comparison unit 140 may read a cache tag of data stored in the cache line 7 corresponding to the block 1110 where the extracted frame cache index is '0', the extracted Y cache index is '1' and the extracted X cache index is '11'. Also, the comparison unit 140 may determine that a cache hit occurs, when the frame cache tag of the cache line 7 and the frame cache tag '0' of the first parameter 1200 are compared and determined to be identical to each other, when the Y cache tag of the cache line 7 and the Y cache tag '0' of the first parameter 1200 are compared and determined to be identical to each other, and when the X cache tag of the cache line 7 and the X cache tag '00' of the first parameter 1200 are compared and determined to be identical to each other.

In this instance, a processing unit 150 may extract data where both a Y Byte offset and an X Byte offset are '0001', from among the data stored in the cache line 7, as the data 1111.

When the frame cache tags, the Y cache tags, or the X cache tags are not identical as a result of the comparing of the cache tags, the comparison unit 140 may determine that a cache miss occurs.

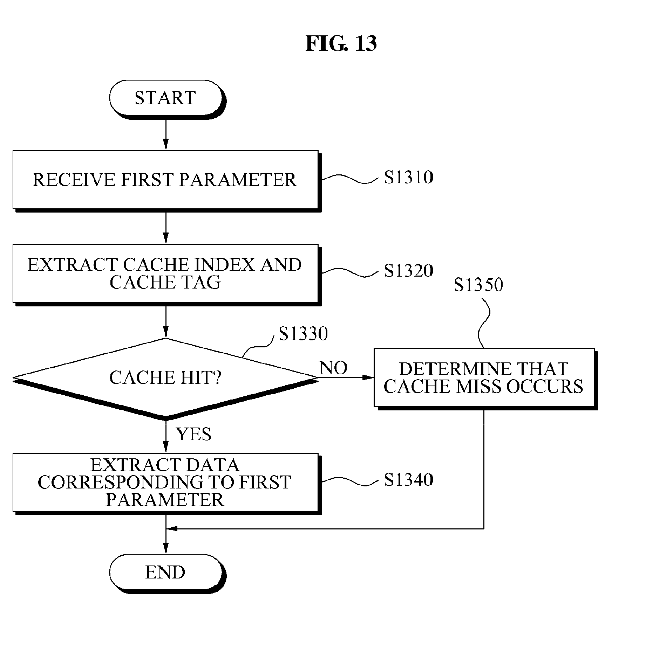

FIG. 13 illustrates a flowchart of a cache control method according to example embodiments.

In operation S1310, a first parameter may be received. According to example embodiments, the first parameter may correspond to a 2D block cache, or a 3D block cache including a frame, which has been described above with reference to FIGS. 3 and 10.

In operation S1320, a cache index and a cache tag are extracted. According to example embodiments, when the first parameter corresponds to the 2D block cache, bits of a particular portion of a Y information area and an X information area may be extracted as the cache index or the cache tag.

Detailed descriptions have been described above with reference to FIGS. 4 and 5.

In operation S1330, the extracted cache tag may be compared to a cache tag stored in a cache line corresponding to the extracted cache index in a cache memory, and thus it may be determined whether a cache hit occurs.

When the cache tags are identical to each other, it may be determined that a cache hit occurs. In this case, data corresponding to the first parameter may be extracted by referring to Byte offset information from among the data stored in the cache line in operation S1340.

When it is determined that a cache hit has not occurred, it may be determined that a cache miss occurs in operation S1350. In this instance, a cache control apparatus may report the cache miss to a CPU. According to other example embodiments, data corresponding to the first parameter may be directly extracted and transmitted to the CPU. Also, cache data, that is, the data corresponding to the first parameter, may be updated.

The cache control method according to the above-described example embodiments may be recorded in computer-readable media including program instructions to implement various operations embodied by a computer. The media may also include, alone or in combination with the program instructions, data files, data structures, and the like. Examples of computer-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one or more software modules in order to perform the operations of the above-described example embodiments, or vice versa. The software modules may be executed on any processor, general purpose computer, or special purpose computer including a cache control apparatus or system.

Although a few embodiments have been shown and described, it would be appreciated by those skilled in the art that changes may be made in these example embodiments without departing from the principles and spirit of the disclosure, the scope of which is defined in the claims and their equivalents.

## Claims

1. A cache control apparatus, comprising:
a parameter input unit to receive a first parameter corresponding to a block-level cache in a main memory;
a cache index extraction unit to extract a cache index from the first parameter;
a cache tag extraction unit to extract a cache tag from the first parameter; and
a comparison unit to determine whether a cache hit occurs using the cache index and the cache tag.

2. The cache control apparatus of claim 1, wherein the first parameter includes a row information area and a column information area for the block-level cache in the main memory.

3. The cache control apparatus of claim 2, wherein the row information area includes a row cache tag, a row cache index, and a row byte offset, and the column information area includes a column cache tag, a column cache index, and a column byte offset.

4. The cache control apparatus of claim 3, wherein the row cache tag and the column cache tag include information identifying a first block from among a plurality of blocks in the main memory, the plurality of blocks corresponding to a same cache line in a cache memory.

5. The cache control apparatus of claim 3, wherein the row cache index and the column cache index include information identifying a first cache line from among a plurality of cache lines in a cache memory, the first cache line storing a first block.

6. The cache control apparatus of claim 3, wherein the row byte offset and the column byte offset include information identifying first data from among pieces of data which are simultaneously stored in a same cache line in a cache memory.

7. The cache control apparatus of claim 2, wherein the first parameter further includes a frame information area for a frame-level cache in the main memory.

8. The cache control apparatus of claim 7, wherein the row information area includes a row cache tag, a row cache index, and a row byte offset, the column information area includes a column cache tag, a column cache index, and a column byte offset, and the frame information area includes a frame cache tag, a frame cache index, and a frame byte offset.

9. The cache control apparatus of claim 8, wherein the frame cache tag, the row cache tag, and the column cache tag include information identifying a first block from among a plurality of blocks in the main memory, the plurality of blocks corresponding to a same cache line in a cache memory.

10. The cache control apparatus of claim 8, wherein the frame cache index, the row cache index, and the column cache index include information identifying a first cache line from among a plurality of cache lines in a cache memory, the first cache line storing a first block.

11. The cache control apparatus of claim 1, further comprising:
a processing unit to extract and provide cache data corresponding to the first parameter when the comparison unit determines that the cache hit occurs.

12. A cache control method comprising:
receiving a first parameter corresponding to a block-level cache in a main memory;
extracting a cache index and a cache tag from the first parameter; and
determining, by a cache control apparatus, whether a cache hit occurs using the cache index and the cache tag.

13. The cache control method of claim 12, wherein the first parameter includes a row information area and a column information area for the block-level cache in the main memory.

14. The cache control method of claim 13, wherein the row information area includes a row cache tag, a row cache index, and a row byte offset, and the column information area includes a column cache tag, a column cache index, and a column byte offset.

15. A computer-readable recording medium storing computer-readable code including a program for implementing a cache control method, the method comprising:
receiving a first parameter corresponding to a block-level cache in a main memory;
extracting a cache index and a cache tag from the first parameter; and
determining whether a cache hit occurs using the cache index and the cache tag.
